# EUROPEAN PATENT APPLICATION

(11) **EP 2 778 543 A1**
(43) Date of publication of application: **17.09.2014**
(21) Application number: 14158787.3
(22) Date of filing: 11.03.2014
(51) Int. Cl.: F24D 17/00, G05D 23/19, H04L 12/00

(54) **Temperature monitoring system and method**

(30) Priority: 11.03.2013 NL 2010425
(71) Applicant: Vermeerplein Groep B.V., 3526 AR Utrecht (NL)
(72) Inventor: Oussoren, Gert, 3526 AR Utrecht (NL)
(74) Representative: Jansen, Cornelis Marinus

(57) **Abstract**

The present disclosure relates to a temperature monitoring system and method for preventing occurrence or proliferation of micro-organisms in a water supply. The system comprises a user switch and a plurality of monitoring modules. The monitoring module receives temperature data from a local network and collects the data in a first electronic message to be sent to the user switch via a message transfer network. The user switch processes the first electronic message and sends a second electronic message to a selected user module, wherein the selection is based on said processing. The disclosure further relates to a monitoring module for use in such a system.

## Description

### FIELD AND BACKGROUND

The present disclosure relates to a temperature monitoring system and method for preventing occurrence or proliferation of micro-organisms in a water supply.

Micro-organisms such as Legionella naturally occur in certain water supplies and may cause serious illness for the human population. E.g. according to the paper *"Legionella and the prevention of legionellosis",* found at the website of the World Health Organization, temperature affects the proliferation of tested Legionella strains as follows. Legionella typically multiplies in water at temperatures between 25 °C and 45 °C, with an optimal temperature range of 32 to 42 °C. Growth of Legionella is typically halted above temperatures of about 48 - 50 °C or below 20 - 25 °C. Therefore, to prevent Legionella infection, the recommended temperature for storage and distribution of hot water is above 48 °C, ideally above 50 °C, and for cold water below 25 °C, ideally below 20 °C.

Typically, a temperature monitoring system is used to monitor that a water supply is kept at the said recommended temperature range. If it is detected that the water temperature falls outside the recommended range, appropriate measures can be taken. Optionally, the water supply can be tested for the occurrence of harmful micro-organisms. If necessary or as a precaution, the water supply can be flushed with hot water or the water supply can be heated to kill the micro-organisms. Alternatively or in addition, a disinfectant such a chlorine can be added to the water. In this way the temperature monitoring system is used for preventing the occurrence or proliferation of micro-organisms in a water supply.

For example, NL 1,033,891 describes a temperature monitoring system and method for preventing occurrence or proliferation of micro-organisms in a water supply. This prior art describes providing a temperature measuring unit having a telecommunication facility implemented as an RFID tag. The RFID tag comprises an integrated temperature sensor that is applied to a water supply pipe line. In one embodiment, an RFID reader is brought in proximity to the tag to read out the temperature values. In another embodiment, the temperature measuring units communicate with a central post. When the central post receives information that the water supply is at a dangerous temperature range, the system may autonomously take action by giving an indication signal to personnel or flushing the supply with hot water.

There is yet a desire to provide a more versatile temperature monitoring system and method for preventing occurrence or proliferation of micro-organisms in a water supply.

### SUMMARY

In a first aspect there is provided a temperature monitoring system for preventing occurrence or proliferation of micro-organisms in a water supply, the system comprising a user switch and a plurality of monitoring modules, wherein a respective monitoring module of the plurality of monitoring modules comprises a module receiver arranged for receiving temperature data from a local data network, the temperature data transmitted to the local data network by a respective measuring module, the temperature data reflecting a temperature of water in a local part of the water supply; a module controller arranged for composing a first electronic message comprising the temperature data, a first address identifying the respective monitoring module as an origin address of the first electronic message, and a second address identifying the user switch as a destination address of the first electronic message; and a module transmitter arranged for transmitting the first electronic message via a message transfer network; wherein the message transfer network is arranged for routing the first electronic message to its destination address; and wherein the user switch comprises a user switch receiver arranged for receiving the first electronic message via the message transfer network; a user switch memory arranged for storing a plurality of user addresses identifying a respective plurality of user modules; a user switch controller arranged for processing the first electronic message and, based on the said processing, selecting a third address from the plurality of user addresses, the third address identifying a respective user module from the plurality of user modules; the user switch controller further arranged for composing a second electronic message comprising the temperature data of the respective monitoring module, the first address identifying the respective monitoring module, and the third address identifying the respective user module as a destination address of the second electronic message; and a user switch transmitter arranged for transmitting the second electronic message via the message transfer network; wherein the message transfer network is arranged for routing the second electronic message to its destination address.

It is presently recognized that an effective system for preventing occurrence or proliferation of micro-organisms may benefit from overseeing and managing a plurality of water supplies, e.g. to prevent an infection spreading from one water supply to another. The present system provides this benefit by an improved level of control over the water supplies. In particular, a user switch is provided to route temperature data, originating from a respective monitoring module, to a selected user module. In this way the system can be more versatile than e.g. a conventional system that sends all temperature data to a single post. The user module is selected by the user switch from a plurality of user addresses stored in a user switch memory. Because the user addresses are stored centrally, and not e.g. at the respective user module, the system can be more versatile e.g. in adapting to changing addresses of the user modules. For example, user modules can be added and removed from the system without having to update addresses in each of the monitoring modules. The monitoring modules send a first electronic message that includes an origin address identifying the respective monitoring module. In this way the system can be more versatile in handling a plurality of monitoring modules. For example, monitoring modules can be added or removed from the system independent from each other. The user switch sends a second electronic message to a selected user module including the temperature data and the origin address identifying the respective monitoring module. This may prompt the user module to take appropriate action with respect to temperature and monitoring module indicated in the second message. The user switch selects the user module to which to send the second message, based on processing the first electronic message received from the respective monitoring module. Because the processed first electronic message includes the temperature data and origin address, the system can be more versatile in selecting the appropriate user module based on specific selection criteria, e.g. temperature thresholds and/or physical location of the monitoring module.

In a second aspect there is provided a temperature monitoring method for preventing occurrence or proliferation of micro-organisms in a water supply, the method comprising providing a user switch and a plurality of monitoring modules, at a respective monitoring module, measuring temperature data reflecting a temperature of water in a local part of the water supply; and composing a first electronic message comprising the temperature data, a first address identifying the respective monitoring module as an origin address of the first electronic message, and a second address identifying the user switch as a destination address of the first electronic message; transmitting the first electronic message via a message transfer network to its destination address; at the user switch, receiving the first electronic message via the message transfer network; storing a plurality of user addresses identifying a respective plurality of user modules; processing the first electronic message and, based on the said processing, selecting a third address from the plurality of user addresses, the third address identifying a respective user module from the plurality of user modules; composing a second electronic message comprising the temperature data of the respective monitoring module, the first address identifying the respective monitoring module, and the third address identifying the respective user module as a destination address of the second electronic message; and transmitting the second electronic message via the message transfer network to its destination address.

The method according to the second aspect may provide similar advantages as the system according to the first aspect.

In a third aspect there is provided a monitoring module for use in a temperature monitoring system according to the first aspect, wherein the monitoring module comprises a module receiver arranged for receiving temperature data from a local data network, the temperature data transmitted to the local data network by a respective measuring module, the temperature data reflecting a temperature of water in a local part of the water supply; a module controller arranged for composing a first electronic message comprising the temperature data, a first address identifying the respective monitoring module as an origin address of the first electronic message, and a second address identifying the user switch as a destination address of the first electronic message; and a module transmitter arranged for transmitting the first electronic message via a message transfer network; wherein the message transfer network is arranged for routing the first electronic message to its destination address.

The monitoring module according to the third aspect may provide similar advantages as the system according to the first aspect.

### BRIEF DESCRIPTION OF THE DRAWINGS

These and other features, aspects, and advantages of the apparatus, systems and methods of the present disclosure will become better understood from the following description, appended claims, and accompanying drawing wherein:
FIG 1 shows a temperature monitoring system comprising a plurality of monitoring modules and user modules;
FIG 2 shows more detail for a respective monitoring module and user module of the system of FIG 1;
FIG 3 shows an embodiment of a monitoring module;
FIG 4 shows an embodiment of a flow diagram for selecting temperature specific text messages.
FIG 5 shows a temperature monitoring method.

### DETAILED DESCRIPTION

Unless otherwise defined, all terms (including technical and scientific terms) used herein have the same meaning as commonly understood by one of ordinary skill in the art to which this invention belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features. All publications, patent applications, patents, and other references mentioned herein are incorporated by reference in their entirety. In case of conflict, the present specification, including definitions, will control.

The term "module" as in "monitoring module", "measuring module" and "user module" is used to emphasize the modular character of these units, i.e. the functionality of the system is separated into independent, interchangeable units. A monitoring module may correspond to a unit capable of receiving temperature data of a water supply and sending this data together with an origin address to the user switch. The origin address may e.g. be linked to a physical location of monitoring module and/or water supply. A measuring module may correspond to a unit capable of measuring temperature data, e.g. via a temperature sensor, and sending the temperature data to the monitoring module. User modules may correspond e.g. to a terminal belonging to an end-user, maintenance crew member or supervisor of the system. Alternatively or in addition, some user modules may correspond to an autonomous component e.g. a heating system arranged for automatically purging one or more water supplies in case of a detected temperature anomaly in one of the water supplies. It will be appreciated that the modular character of the system allows it to adapt to changing requirements.

The "controller", e.g. the "module controller" and "user switch controller", may comprise one or more processors configured to perform operational acts in accordance with the present systems and methods, such as to provide control signals to the various other module components. The processor may be a dedicated processor for performing in accordance with the present system or may be a general-purpose processor wherein only one of many functions operates for performing in accordance with the present system. The processor may operate utilizing a program portion, multiple program segments, or may be a hardware device utilizing a dedicated or multi-purpose integrated circuit. Any type of processor may be used such as dedicated or shared one. The processor may include micro-controllers, central processing units (CPUs), digital signal processor s (DSPs), ASICs, or any other processor(s) or controller(s) such as digital optical devices, or analog electrical circuits that perform the same functions, and employ electronic techniques and architecture. The controller or processor may further comprise a memory that may be part of or operationally coupled to the controller. The memory may be any suitable type of memory where data is stored. Any medium known or developed that can store and/or transmit information suitable for use with the present systems and methods may be used as a memory. The memory may also store user preferences and/or application data accessible by the controller for configuring it to perform operational acts in accordance with the present systems and methods.

In some cases, terms such as "module" and "user switch", are used as an adjective to indicate that a referred item is associated with the monitoring module or the user switch, respectively. For example, the module receiver, the module controller, and module transmitter are associated with the monitoring module. Furthermore, e.g. the user switch receiver, user switch memory, user switch controller, and user switch transmitter are associated with the user switch. On the other hand, e.g. the term "user address" indicates the address (on the message transfer network) of the respective user module.

In some cases, the adjectives "first", "second", etc. are used to distinguish referred items, e.g. the first electronic message and the second electronic message or the first, second and third addresses. These adjectives do not necessarily reflect a particular number or sequence of the referred items. For example, the "first message" may sent multiple times with different contents, e.g. different temperature data each time, and may also be sent after some other message was sent before. Also, an intermediate message may be sent in between the "first message" and "second message".

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. The description of the exemplary embodiments is intended to be read in connection with the accompanying drawings, which are to be considered part of the entire written description. In the drawings, the size and relative sizes of systems, components, layers, and regions may be exaggerated for clarity. Embodiments are described with reference to schematic illustrations of possibly idealized and/or intermediate structures of the invention.

In the description, relative terms as well as derivatives thereof should be construed to refer to the orientation as then described or as shown in the drawing under discussion. These relative terms are for convenience of description and do not require that the system be constructed or operated in a particular orientation unless stated otherwise. It will further be understood that when an element or layer is referred to as being "on", "connected to" or "coupled to" another element or layer, it can be directly on, connected or coupled to the other element or layer or intervening elements or layers may be present. In contrast, when an element is referred to as being "directly on", "directly connected to" or "directly coupled to" another element or layer, there are no intervening elements or layers present. It will further be understood that when a particular step of a method is referred to as subsequent to another step, it can directly follow said other step or one or more intermediate steps may be carried out before carrying out the particular step. Like numbers refer to like elements throughout.

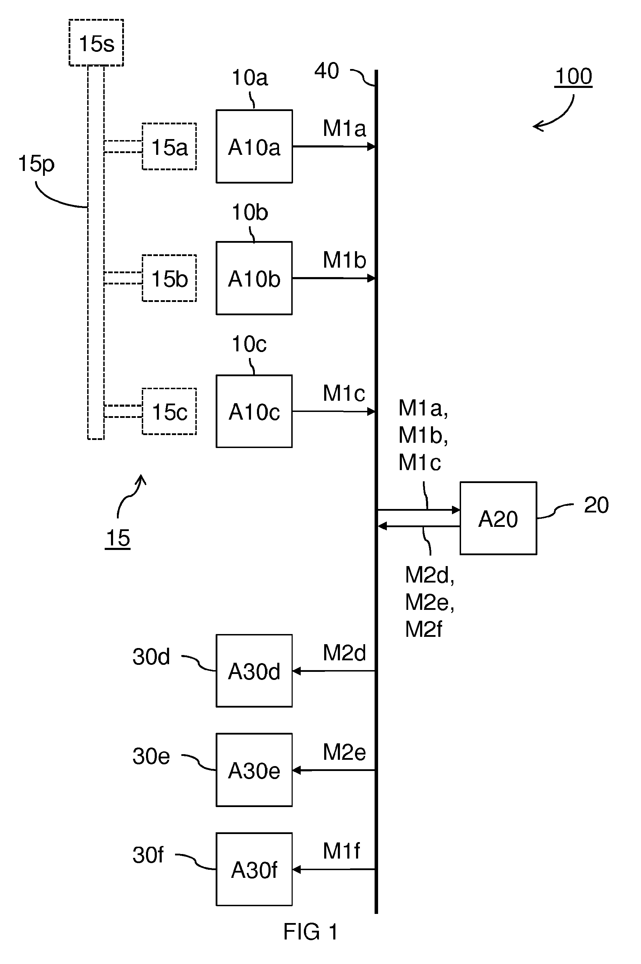

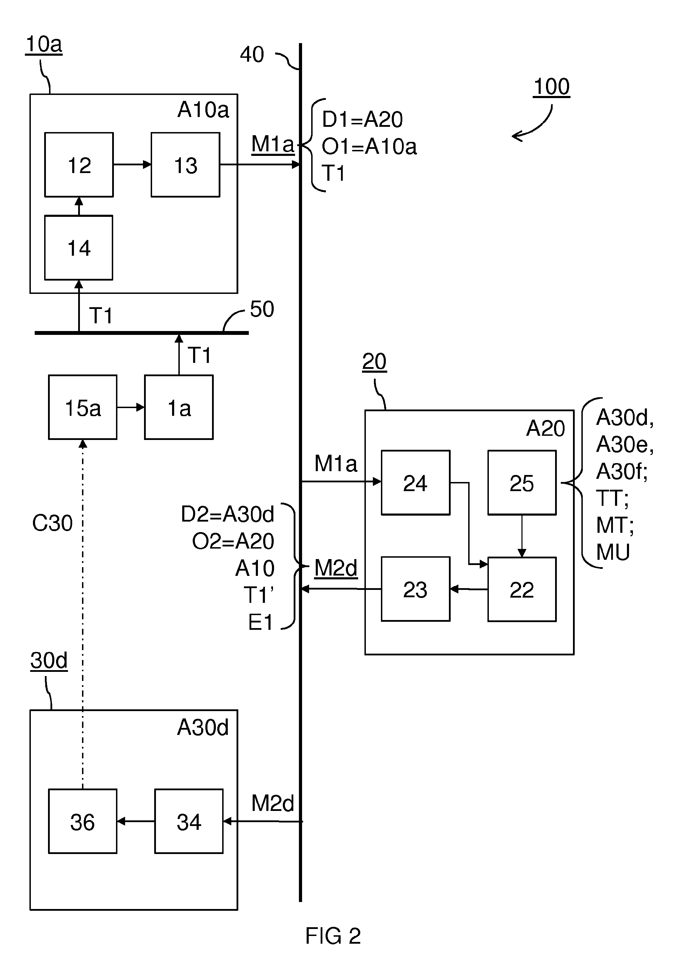

FIGs 1 and 2 show a temperature monitoring system 100 for preventing occurrence or proliferation of micro-organisms in a water supply.

FIG 1 shows a system 100 comprising a user switch 20 and a plurality of monitoring modules 10a, 10b and 10c. The plurality of monitoring modules 10a, 10b and 10c are identified on a message transfer network 40 by a respective plurality of addresses A10a, A10b and A10c. This figure also shows a plurality of user modules 30d, 30e, and 30f, identified on message transfer network 40 by a respective plurality of user addresses A30d, A30e and A30f. As an example, first electronic messages M1a, M1b and M1c originate from monitoring modules 10a, 10b and 10c, respectively, and are destined for the user switch (20). As a further example, second electronic messages M2d, M2e and M2f are destined for user modules 30d, 30e and 30f, respectively, and originate from the user switch (20). The user switch 20 may act as a hub for distributing electronic messages from the monitoring modules to the user modules.

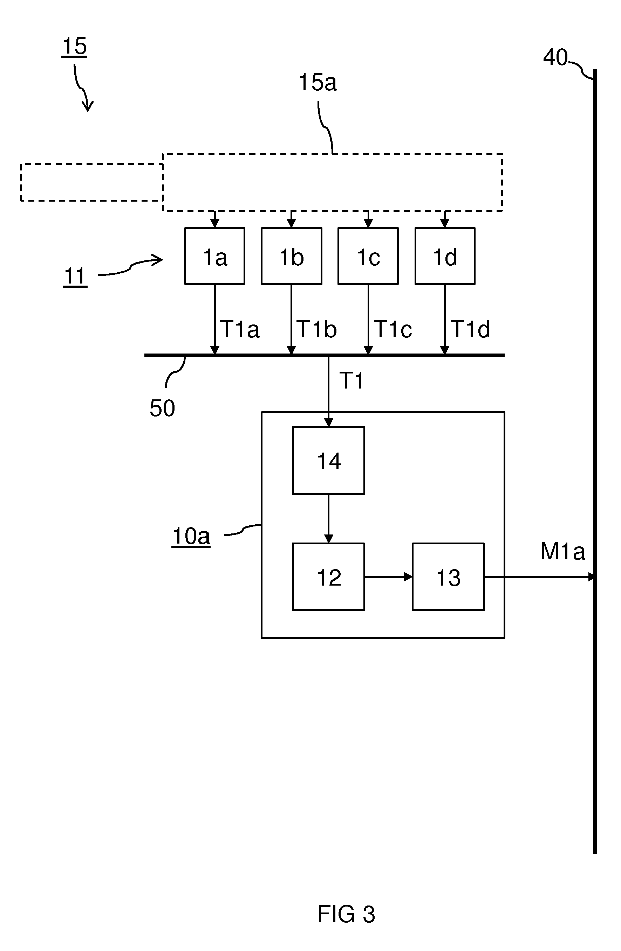

Further shown in FIG 1, is the water supply 15. In one embodiment the water supply 15 comprises water supply transfer means 15p such as piping that interconnect a plurality of local parts 15a, 15b, 15c of the water supply 15 to each other and/or to a water supply source 15s. The local parts 15a, 15b, 15c can be at different locations, e.g. at different buildings that are all connected to a larger water supply network 15. As shown in FIG 3, there may be multiple measuring modules 1a, 1b, 1c, 1d, within one local part 15a of the water supply 15, e.g. to measure temperatures T1a, T1b, T1c, T1d, at different locations of a local part 15a, e.g. within different parts of a building. It will be appreciated that due to the interconnections, monitoring each of the local parts 15a, 15b, 15c by a respective monitoring module 10a, 10b, 10c may help prevent occurrence or proliferation of micro-organisms in the water supply 15 as a whole

FIG 2 shows a respective monitoring module 10a of the plurality of monitoring modules 10a,10b,10c described in FIG 1. The monitoring module 10a comprises a module receiver 14, a module controller 12, and a module transmitter 13. The module receiver 14 is arranged for receiving temperature data T1 from a local data network 50. The temperature data T1 is transmitted to the local data network 50 by a respective measuring module 1a. The measuring module 1a may e.g. comprise a temperature sensor and a measuring module transmitter, arranged to transmit the temperature data T1 to the local data network 50. The temperature data T1 reflects a temperature of water in a local part 15a of the water supply. Typically, the monitoring module 10a and the measuring module 1a may be comprised at a single location, e.g. a building having access to the local part 15a of the water supply. The location may further comprise the local data network 50 to link the measuring module 1a to the monitoring module 10a.

The module controller 12 is arranged for composing a first electronic message M1a comprising the temperature data T1, a first address A10a, and a second address A20. The first address A10a identifies the respective monitoring module 10a as an origin address O1 of the first electronic message M1a. The second address A20 identifies the user switch 20 as a destination address D1 of the first electronic message M1a. The module transmitter 13 is arranged for transmitting the first electronic message M1a via a message transfer network 40. The message transfer network 40 is arranged for routing the first electronic message M1a to its destination address D1.

The user switch 20 comprises a user switch receiver 24, a user switch memory 25, a user switch controller 22, and a user switch transmitter 23. The user switch receiver 24 is arranged for receiving the first electronic message M1a via the message transfer network 40. The user switch memory 25 is arranged for storing the plurality of user addresses A30d, A30e, A30f identifying the respective plurality of user modules 30d, 30e, 30f (shown in FIG 1). The user switch controller 22 is arranged for processing the first electronic message M1a and, based on the said processing, selecting a third address A30d from the plurality of user addresses A30d, A30e, A30f.

The third address A30d identifies a respective user module 30d from the plurality of user modules 30d, 30e, 30f. The user switch controller 22 is further arranged for composing a second electronic message M2d comprising temperature data T1', the first address A10a, and the third address A30d. The temperature data T1' corresponds to the temperature data T1 received from the respective monitoring module 10a. The temperature data T1' included in the second electronic message M2d need not be identical to the temperature data T1 received in the first electronic message M1a. For example, the temperature data may be filtered or transformed into a different data format wherein relevant information is of the temperature data retained. The first address A10a identifies the respective monitoring module 10a. The third address A30d identifies the respective user module 30d as a destination address D2 of the second electronic message M2d. The user switch transmitter 23 is arranged for transmitting the second electronic message M2d via the message transfer network 40. The message transfer network 40 is arranged for routing the second electronic message M2d to its destination address D2.

In one embodiment, the user switch controller 22 is arranged for composing the second electronic message M2d further comprising the second address A20 identifying the user switch 20 as an origin address 02 of the second electronic message M2d. This may have an advantage that the user module 30d can reply to the second electronic message M2d and this reply is received back at the user switch 20 and not e.g. at the monitoring module 10a.

In one embodiment the user switch memory 25 is arranged for storing one or more threshold temperature criteria TT associated with one or more of the plurality of user addresses A30d, A30e, A30f. In this embodiment, the user switch controller 22 is arranged for processing the first electronic message M1a for selecting a third address A30d by matching the temperature data T1 to the one or more threshold temperature criteria TT. Based on the matching the temperature data T1 to a specific threshold temperature criterion of the one or more threshold temperature criteria TT, the user switch controller 22 is further arranged for selecting a user address A30d associated with the specific threshold temperature criterion as the third address. For example, the threshold temperature criteria TT may be set to temperatures falling outside the recommended temperatures for storage and distribution of water in view of Legionella infection, e.g. as recited in the introduction of this disclosure. This embodiment may enable that, depending on the temperature date T1, the message is sent to specific recipients, e.g. a message can be sent to a user module of a mechanic or repairman in case the temperature data is anomalously high or low. The mechanic can then take specific action.

In a further or alternative embodiment, the user module 30d comprises an automated water supply control 36, arranged to automatically interact with the water supply 15. The interaction C30 may comprise e.g. sampling the water supply 15 for micro-organisms and/or disinfecting the water supply 15. For example, the water supply control 36 may comprise a flushing mechanism C30 to flush the water supply 15. Alternatively or in addition, the water supply control 36 may comprise a heating means for heating water in the water supply 15, e.g. above a temperature that kills the micro-organisms. Alternatively or in addition, the water supply control 36 may comprise a shut off mechanism for interrupting the water supply 15.

In a further or alternative embodiment, the user switch memory 25 is arranged for storing one or more threshold temperature criteria TT and the system is arranged for transmitting the second electronic message M2d only if the temperature data T1 matches a one or more of the threshold temperature criteria TT. For example, the second electronic message is only sent to the user module 30d when the measured temperature data T1 indicates a potential problem with the water supply. This may prevent overwhelming the user module 30d with unnecessary electronic messages, e.g. when no action is required. Alternatively or in addition, in some cases it may be desired to store all temperature data T1, either at the user switch 20 or at a specific user module. For example, the stored temperature data T1 may be used for long term monitoring of respective water supplies.

In a further or alternative embodiment, the user switch memory 25 is arranged for storing a plurality of temperature specific text messages MT associated with one or more threshold temperature criteria TT. In this embodiment, the user switch controller 22 is arranged for matching the temperature data T1 to the one or more threshold temperature criteria TT. The user switch controller 22 is further arranged for selecting a temperature specific text message from the plurality of temperature specific text messages MT based on the said matching. The user switch controller 22 is further arranged for composing the second electronic message M2d further comprising the selected temperature specific text message. Advantageously, the temperature specific text messages MT may be used for automatically interpreting the temperature data according to predefined criteria. Furthermore, a specific course of action may be automatically recommended to a user of a user module. For example, one temperature specific text messages MT associated with a threshold temperature criterion between 25 and 45 °C may comprise the message *"Warning, possible contamination in water supply".* As a further example, one temperature specific text messages MT associated with a threshold temperature criterion below 20 °C may comprise the message *"Water temperature OK".* It will be appreciated that the temperature specific text message MT may qualify as "temperature data" as used herein, i.e. instead of raw data, the text message conveys the relevant information of the data. Alternatively, the temperature specific text message MT may be included together with the raw temperature data as measured by the monitoring module 10a.

In a further or alternative embodiment the user switch memory 25 is arranged for storing a plurality of user specific text messages MU associated with one or more of the plurality of user addresses A30d, A30e, A30f. In this embodiment the user switch controller 22 is arranged for selecting one of the plurality of user specific text messages MU having an associated user address in common with the third address A30d. The user switch controller 22 is further arranged for composing the second electronic message M2d further comprising the selected user specific text message. In this way a specific interpretation is automatically provided of the second electronic message M2d for a user of the respective user module 30d. Advantageously, depending on the type of user behind the respective user module 30d, the message can be different. It will be appreciated that the user specific text message MU may qualify as "temperature data", as used herein, i.e. instead of raw data with numbers, the text message conveys the relevant information of the data tailored to the specific user. Alternatively, the user specific text message MU may be included together with the raw temperature data as measured by the monitoring module 10a and/or together with the temperature specific text message MT as detailed above.

In one example, the user of the respective user module 30d belongs to a mechanic or maintenance crew responsible for the water supply. In that case, the user specific text messages MU associated with the user address A30d of the said user module 30d may comprise a text such as *"Please repair the water supply".* In another example, the user module may belong to an end-user and the associated message could be *"Please do not use the water supply".* This embodiment can also be advantageously combined with the aforementioned embodiments wherein threshold temperature criteria TT are used. For example, the messages may be differentiated both depending on the intended user and depending on the measured temperature data T1. In a further embodiment, the second message is only sent if the temperature data T1 matches specific threshold temperature criteria TT. The temperature criteria may also be different for different user modules.

In one embodiment, multiple second messages are generated by the user switch 20 from a single first message. For example, both an end-user and a maintenance crew may be alerted by the second message of anomalous temperature readings originating from the same measuring station. The second messages may have a different user specific text message MU depending on the recipient, e.g. as explained above.

In a further or alternative embodiment, one or more of the plurality of user addresses A30d, A30e, A30f have an associated controller address, wherein the system is arranged for transmitting a third message to the controller address when a user address having an associated controller address is selected as the third address. For example, a user address A30d of a maintenance crew may be associated with a controller address that wherein a controller checks whether the maintenance crew has adequately responded to the message.

In one embodiment, the message transfer network 40 comprises Internet and the system is arranged for transmitting and/or receiving the first and/or second electronic messages M1, M2 as e-mail messages. Using e-mail messages may have an advantage that these provide a predefined format, e.g. wherein a "from-address" of the e-mail indicates an origin address O1, O2 of the respective electronic messages M1, M2. For example, an e-mail address A10a of a respective monitoring module 10a may be have the format *"zipcode_housenumber@example.com".* This may have an advantage that the location of the monitoring module 10a can be derived from the originating e-mail address. Furthermore, a "to-address" of the e-mail can indicate a destination address D1, D2 of the respective electronic messages M1, M2. The temperature data T1 may sent, e.g. as an attachment of the respective e-mails and/or in the e-mail body text. Also, as detailed above, a temperature or user specific message may be added to the message body. Internet may also provide a desired robustness, e.g. redundancy, for handling the messages. In one embodiment, SMPT protocol is used for sending the electronic messages. Alternatively or in addition also other formats can be used, e.g. SMS, CSV, or XML, e.g. sent over FPT, HTTP, and/or HTTPS. The connection to Internet may be a wired connection. Alternatively, wireless connection to Internet is also possible, e.g. via LTE/UMTS or GPRS. Besides public networks, also a private network may be used, e.g. belonging to a user of the water supply. Electronic messages such as e-mail have an advantage that they are typically noticed soon after sending by a recipient user. This may be in contrast e.g. to a system wherein a user has to actively log in to check measurement data, which he can forget.

In an alternative or further embodiment, the message transfer network 40 comprises a mobile phone network and the system is arranged for transmitting and/or receiving the first and/or second electronic messages M1a, M1b, M1c, M2d, M2e, and/or M2f as mobile phone messages. For example, either one or both of the electronic messages may be sent as an SMS message or other format received by a mobile telephone. Also combinations of Internet and the mobile phone network are possible, e.g. messages that are sent as an e-mail may be received by an internet-enabled phone.

In one embodiment, the module receiver 14 is arranged for receiving a plurality of temperature values at measured by the measuring module 1a at consecutive times and the module controller 12 collects the plurality of temperature values to compose the temperature data T1. This may have an advantage that a history of temperature measurements is provided. This may help e.g. in tracing problems with the water supply temperature control.

In an alternative or further embodiment, the respective monitoring module 10a comprises a module memory comprising module specific threshold temperature criteria. Furthermore, in this embodiment, the respective monitoring module 10a is arranged for immediately sending the first electronic message M1a when the temperature data T1 matches the module specific threshold temperature criteria. In this case it may be advantageous to check already the temperature thresholds locally at the monitoring module 10a instead of waiting for the data to be collected over a longer period of time. In this way if there is an issue with the water supply, an alert may be sent sooner than first waiting for a specific timer period to elapse.

In an alternative or further embodiment, the respective monitoring module 10a is arranged for periodically transmitting the first electronic message M1a after a specific time period (e.g. every month), wherein the temperature data T1 comprises temperature values measured during the said specific time period. This may have an advantage that a periodic status report of the water supply is provided. Such a periodic status report may be useful e.g. in case a problem with infection is later detected in the water supply.

In one embodiment, the respective monitoring module 10a comprises a memory arranged for locally storing the temperature data T1 in case of an interruption of connectivity to the message transfer network 40. For example, in case of network failure, there is a backup that can be downloaded locally from the monitoring module 10a, e.g. onto a USB stick. This provides an advantage that the monitoring module 10a is not dependent on the network availability.

In a further embodiment, the respective monitoring module 10a is arranged for sending the locally stored temperature data T1 when the connectivity to the message transfer network 40 is resumed. For example, the monitoring module 10a holds the data while the network connectivity is interrupted and sends the data when the network connectivity is resumed. This may provide an advantage that the network need not be constantly available to the monitoring module 10a.

FIG 3 shows an embodiment of a monitoring module 10a. The monitoring module 10a may be advantageously used in a temperature monitoring system 100 as described herein. The monitoring module 10a comprises a module receiver 14 arranged for receiving temperature data T1 from a local data network 50. The temperature data T1 is transmitted to the local data network 50 by a respective measuring module 1a. The temperature data T1 reflects a temperature of water in a local part 15a of the water supply 15. The monitoring module 10a further comprises a module controller 12 arranged for composing a first electronic message M1a. As was described with reference to FIG 2, the first electronic message M1a comprises the temperature data T1, a first address A10a identifying the respective monitoring module 10a as an origin address O1 of the first electronic message M1a, and a second address A20 identifying the user switch 20 as a destination address D1 of the first electronic message M1a. The monitoring module 10a further comprises a module transmitter 13 arranged for transmitting the first electronic message M1a via a message transfer network 40. The message transfer network 40 is arranged for routing the first electronic message M1a to its destination address D1.

In the embodiment shown, the measuring module 1a is one of several measuring modules 1a, 1b, 1c, 1d comprised in a measuring system 11 arranged for measuring temperature values of an extended local water supply 15a. A respective measuring module 1a, 1b, 1c, 1d is arranged for measuring a temperature value T1a, T1b, T1c, T1d at a respective location of the local part 15a of the water supply 15. The respective measuring module is further arranged to transmit the temperature value via a local data network 50. The respective monitoring module 10a further comprises a module receiver 14 arranged for receiving temperature values from the local data network 50. The module controller 12 is arranged to collect the temperature values from the module receiver 14 to compose the temperature data T1 in the first electronic message M1a. As described above the module transmitter 13 is arranged for transmitting the first electronic message M1a via message transfer network 40.

In one embodiment, the local data network 50 comprises a KNX bus system and the module receiver 14 comprises a KNX receiver. The module controller 12 is thus arranged for interfacing between the KNX bus system 50 and the message transfer network 40. KNX is a standardized (EN 50090, ISO/IEC 14543), OSI-based network communications protocol for intelligent buildings. While the KNX protocol may be particularly suitable, e.g. for providing network in a building, also other protocols and systems may be used having similar advantage. In particular, the term "local data network" may refer e.g. to any home network, preferably separate from the message transfer network 40.

In one embodiment, a measuring module comprises a wireless sensor. This may have an advantage that the sensor can be remotely interrogated. E.g. the wireless sensor may be implemented as an RFID chip comprising a measuring module as described in NL 1,033,891. Alternatively or in addition, the wireless sensor may be comprise an active transmitter fed by a local power supply for improved range. In one embodiment, the measuring system 11 comprises a wireless measuring module arranged for wirelessly communicating with the module controller 12.

In one embodiment, the module controller 12 is arranged to send an electronic message when a measuring module 1a does not respond. For example, the message may include a text explaining that the measuring module is possibly broken. In a another embodiment, the measuring module 1a may send a message if a sensor of the measuring module does not respond or it is otherwise detected that part of the measuring module is broken.

It will be appreciated that the user switch described herein may provide an advantage that data processing and user addressing can be centrally controlled. For example, the user switch may provide a central means of adapting threshold temperature criteria and/or the associated plurality of user addresses. Alternatively or in addition, it may be advantageous for some embodiments that the monitoring module is also arranged for providing at least part of the processing of the temperature data.

For example, in one embodiment, the monitoring module 10a comprises a module memory (not shown) arranged for storing one or more threshold temperature criteria; and the monitoring module is arranged for transmitting the first electronic message M1a only if the temperature data matches a one or more of the threshold temperature criteria. This embodiment may provide an advantage that the first message need not be always sent, thereby reducing network traffic.

In another embodiment, the monitoring module comprises a clock, wherein the monitoring module is arranged for transmitting the first electronic message at specific times indicated by the clock. This embodiment can be used for instance to provide a monthly report of temperature data. Also a combination is possible, wherein the monitoring module is arranged for sending a periodic message comprising temperature data but at the same time can also send a message at other times but only when the temperature data matches a one or more of the threshold temperature criteria.

In one embodiment, the monitoring module 10a comprises a module memory (not shown) arranged for storing a plurality of temperature specific text messages associated with one or more threshold temperature criteria; and the module controller 12 is arranged for matching the temperature data to the one or more threshold temperature criteria; selecting a temperature specific text message from the plurality of temperature specific text messages based on the said matching; and composing the first electronic message further comprising the selected temperature specific text message thereby providing an interpretation of the temperature data. This embodiment may help in reducing processing load of the user switch and/or debugging messages received from the monitoring modules.

It is recognized that the using a local data network 50 may provide further advantages in terms of providing a modular design wherein measuring modules may be added or removed as needed at different locations. However, alternative to using a local data network 50 to transfer the temperature data T1, the measuring module 1a may also be comprised in the monitoring module 10a as a single unit. In that case the local data network 50 and the module receiver 14 may be omitted wherein the module controller 12 receives the temperature data T1 directly or indirectly from the measuring module and/or a temperature sensor.

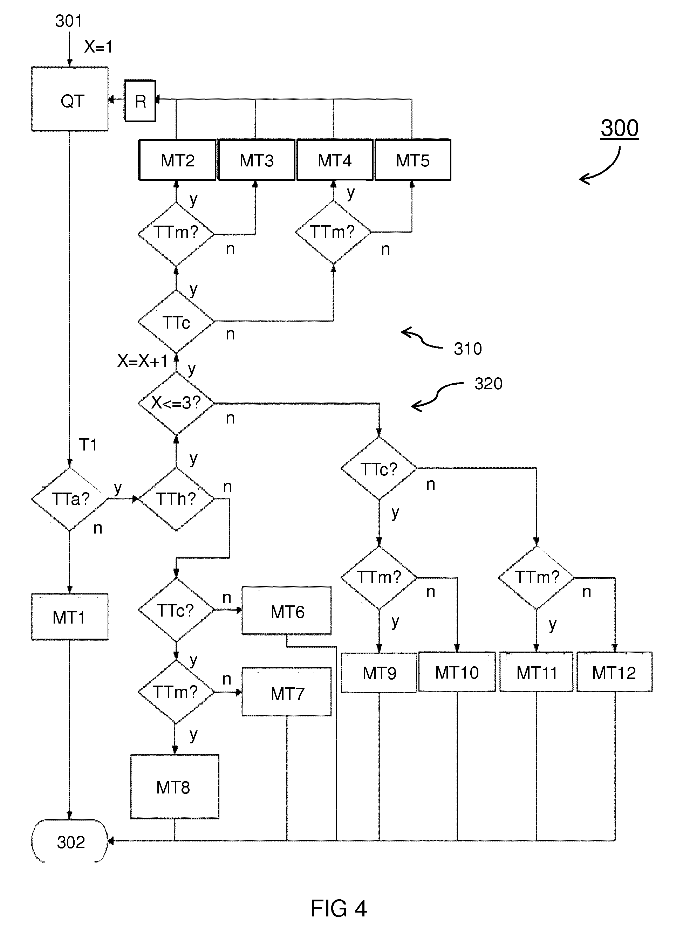

FIG 4 shows an embodiment of a flow diagram 300 for selecting temperature specific text messages. Such a flow diagram may be programmed e.g. into the user switch memory 25 of the user switch 20 and executed by the user switch controller 22. The references 'y' and 'n' in the flow diagram, refer to a criterion being met or not, respectively.

The flow diagram starts at reference numeral 301. A counter "X" is set to value 1. A query QT of temperature data T1 of one of the monitoring modules is performed. In this example, the temperature data T1 comprises temperature values measured at three points in a water supply comprising a cold water supply, a hot water supply, and a main water supply.

Firstly, the temperature data T1 comprises a temperature value Tc measured at the cold water supply. The cold water supply has a cold water temperature criterion TTc: Tc>25 °C. If the criterion TTc is fulfilled, this indicates that the cold water runs a risk of contamination. Secondly, the temperature data T1 comprises a temperature value Th measured at the hot water supply. The hot water supply has a hot water temperature criterion TTh: Th<60 °C If the criterion TTc is fulfilled, this indicates the hot water runs a risk of contamination. Thirdly, the temperature data (T1) comprises a temperature value Tm measured at the main water supply. The main water supply has a main water temperature criterion TTm: Tm>20 °C If the criterion TTc is fulfilled, this indicates the main water supply runs a risk of contamination. Finally, there is an overall temperature criterion TTa that is true if any of the criteria TTc, TTh, and TTm is true, i.e. if there is a risk of contamination in any of the cold water supply, hot water supply, and/or main water supply.

After the initial query QT, the controller check if the temperature data T1 match the overall temperature criterion TTa. If not, i.e. no anomalous temperatures are found, the user switch controller includes temperature specific text message MT1 in the electronic message. The message MT1 may e.g. comprise the text *"There are no problems in the water supply".* After sending the message, the process finishes at reference numeral 302.

If any anomalies are found in the temperature data (T1), the controller checks if the hot water temperature criterion TTh is matched, i.e. if there is a problem in the hot water supply. If false, the controller checks if the cold water temperature criterion TTc is matched, i.e. if there is a problem in the cold water supply. If also false, it is concluded that the problem is in the main water supply and the user switch controller includes temperature specific text message (MT6) in the electronic message. The message MT6 may e.g. comprise the text: *"There is a problem in the main water supply only".*

Alternatively if the cold water temperature criterion TTc is matched, the controller continues to check whether also the main water temperature criterion TTm is matched. If true, the user switch controller includes temperature specific text message MT8 in the electronic message. The message MT8 may e.g. comprise the text *"There are problems both in the cold water supply and in the main water supply, but not in the hot water supply".*

In this way temperature specific text messages MT1-MT12 may be generated for the various possible circumstances.

In one embodiment, a hot water temperature criterion TTh triggers one or more rechecks if a first measurement of the temperature falls outside a predetermined interval associated with a recommended hot water temperature. In the present example, if the hot water temperature criterion TTh is matched, i.e. if there is a problem in the hot water supply, the counter "X" is checked to determine whether this has happened before in the measuring cycle. If it is determined that the counter is still equal to three or less, the counter is increased (X=X+1) and the upper branch 310 of the flow diagram is followed. In this case the hot water temperature criterion TTh has only been triggered a few times (≤3), and this need not indicate a problem, especially if in a subsequent check the hot water temperature is again high enough, e.g. to disinfect the water supply. Depending on the other criteria TTc and TTm, different messages MT2 ... MT5 may be sent comprising a temperature specific text message like *"Warning, possible problem with hot water supply, rechecking...".* As indicated by reference "R" in the figure, a recheck may be initiated. In one embodiment, the recheck may be initiated after a specific waiting period, e.g. after a waiting period of four hours. In one embodiment, a warning message is generated if a temperature of a hot water supply has not been higher than 60 °C for a predetermined period of time, e.g. a week. This can be achieved e.g. by periodically checking the hot water supply temperature and keeping a counter that reaches a threshold when the predetermined period is exceeded. By having the temperature above a threshold of 60 °C, even for a short period, micro-organisms in the water supply are mostly neutralized and are not likely to return for some period of time.

In one embodiment, the first and/or second electronic message is only sent if the hot water temperature Th matches the hot water temperature criterion TTh for a period longer than a predetermined safety period. The safety period can be a period that is short enough such that no substantial build-up takes place of potential micro-organisms. For example, the safety period can be one day or possibly longer.

Referring back to the checking of the counter "X≤3", if it is determined that the counter "X" is more than three, the lower branch 320 of the flow diagram is followed. This indicates the hot water temperature criterion TTh is consistently triggered and there may be a persistent problem, e.g. more than 12 hours have passed wherein the water temperature was in a range wherein micro organisms may proliferate in the water supply. In that case, depending on the other criteria TTc and TTm, different messages MT9 ... MT12 may be sent comprising a temperature specific text message like *"Warning, a persistent problem for more than twelve hours has been registered in the hot water supply".*

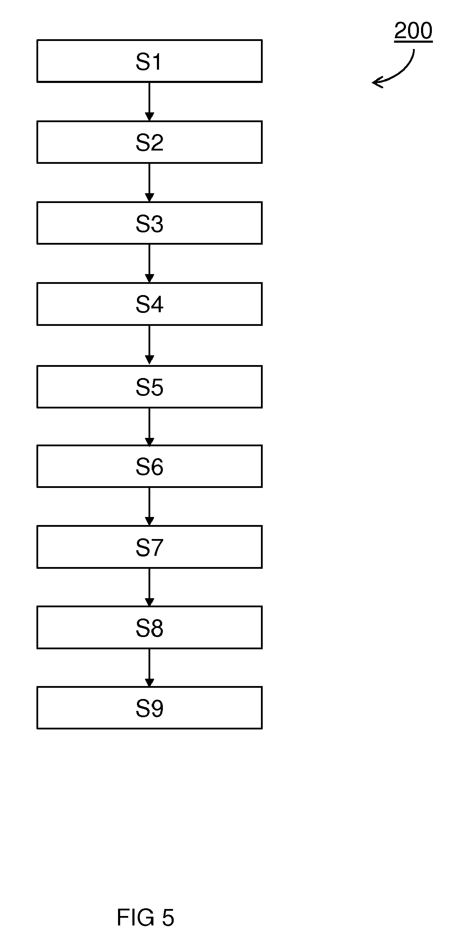

FIG 5 shows a temperature monitoring method (200) for preventing occurrence or proliferation of micro-organisms in a water supply. The method comprises
S1: providing a user switch and a plurality of monitoring modules,
S2: at a respective monitoring module, measuring temperature data reflecting a temperature of water in a local part of the water supply; and
S3: composing a first electronic message comprising the temperature data, a first address identifying the respective monitoring module as an origin address of the first electronic message, and a second address identifying the user switch as a destination address of the first electronic message;
S4: transmitting the first electronic message via a message transfer network to its destination address;
S5: at the user switch, receiving the first electronic message via the message transfer network;
S6: storing a plurality of user addresses identifying a respective plurality of user modules;
S7: processing the first electronic message and, based on the said processing, selecting a third address from the plurality of user addresses, the third address identifying a respective user module from the plurality of user modules;
S8: composing a second electronic message comprising the temperature data of the respective monitoring module, the first address identifying the respective monitoring module, and the third address identifying the respective user module as a destination address of the second electronic message; and
S9: transmitting the second electronic message via the message transfer network to its destination address.

It will be appreciated that the method 200 may be embodied as program instructions on a non-transient computer-readable storage medium. In particular, when run on a temperature monitoring system as described herein, the program instructions may cause the system to perform the method 200.

It will also be appreciated that the embodiments of the system 100 as described herein may be similarly described as respective embodiments of the method 200, e.g. omitting specific reference to hardware components.

While example embodiments were shown for systems and methods, also alternative ways may be envisaged by those skilled in the art having the benefit of the present disclosure for achieving a similar function and result. E.g. some components may be combined or split up into one or more alternative components. For example, while preferably, the same message transfer network is used for both receiving and sending of electronic messages, this may also be done via separate networks. Furthermore, while preferably the local data network is separate from the message transfer network, alternatively, the local data network and message transfer network may be part of an integrated network. The various elements of the embodiments as discussed and shown offer certain advantages, such as preventing occurrence or proliferation of micro-organisms in a water supply, providing periodic measurement and logging and/or status summary of a water supply system. Of course, it is to be appreciated that any one of the above embodiments or processes may be combined with one or more other embodiments or processes to provide even further improvements in finding and matching designs and advantages, e.g. also other measurement variables relating to water, gas and/or electricity may be included in the measurement data.

Finally, the above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the present systems and methods as set forth in the claims that follow. The specification and drawings are accordingly to be regarded in an illustrative manner and are not intended to limit the scope of the appended claims.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage.

## Claims

1. Temperature monitoring system (100) for preventing occurrence or proliferation of micro-organisms in a water supply (15), the system comprising a user switch (20) and a plurality of monitoring modules (10a,10b,10c), wherein a respective monitoring module (10a) of the plurality of monitoring modules (10a,10b,10c) comprises
- a module receiver (14) arranged for receiving temperature data (T1) from a local data network (50), the temperature data (T1) transmitted to the local data network (50) by a respective measuring module (1a), the temperature data (T1) reflecting a temperature of water in a local part (15a) of the water supply (15);
- a module controller (12) arranged for composing a first electronic message (M1a) comprising
o the temperature data (T1),
o a first address (A10a) identifying the respective monitoring module (10a) as an origin address (O1) of the first electronic message (M1a), and
o a second address (A20) identifying the user switch (20) as a destination address (D1) of the first electronic message (M1a); and
- a module transmitter (13) arranged for transmitting the first electronic message (M1a) via a message transfer network (40); wherein the message transfer network (40) is arranged for routing the first electronic message (M1a) to its destination address (D1); and wherein the user switch (20) comprises
- a user switch receiver (24) arranged for receiving the first electronic message (M1a) via the message transfer network (40);
- a user switch memory (25) arranged for storing a plurality of user addresses (A30d, A30e, A30f) identifying a respective plurality of user modules (30d, 30e, 30f);
- a user switch controller (22) arranged for processing the first electronic message (M1a) and, based on the said processing, selecting a third address (A30d) from the plurality of user addresses (A30d, A30e, A30f), the third address (A30d) identifying a respective user module (30d) from the plurality of user modules (30d, 30e, 30f); the user switch controller (22) further arranged for composing a second electronic message (M2d) comprising
o the temperature data (T1) of the respective monitoring module (10a),
o the first address (A10a) identifying the respective monitoring module (10a), and
o the third address (A30d) identifying the respective user module (30d) as a destination address (D2) of the second electronic message (M2d); and
- a user switch transmitter (23) arranged for transmitting the second electronic message (M2d) via the message transfer network (40); wherein the message transfer network (40) is arranged for routing the second electronic message (M2d) to its destination address (D2).

2. System according to claim 1 wherein the user switch controller (22) is arranged for composing the second electronic message (M2d) further comprising
o the second address (A20) identifying the user switch (20) as an origin address (02) of the second electronic message (M2d).

3. System according to any of the previous claims wherein
- the user switch memory (25) is arranged for storing one or more threshold temperature criteria (TT) associated with one or more of the plurality of user addresses (A30d, A30e, A30f); and
- the user switch controller (22) is arranged for processing the first electronic message (M1a) for selecting a third address (A30d) by matching the temperature data (T1) to the one or more threshold temperature criteria (TT); and, based on the matching the temperature data (T1) to a specific threshold temperature criterion of the one or more threshold temperature criteria (TT), selecting a user address associated with the specific threshold temperature criterion as the third address (A30d).

4. System according to any of the previous claims wherein
- the user switch memory (25) is arranged for storing one or more threshold temperature criteria (TT); and
- the system is arranged for transmitting the second electronic message (M2d) only if the temperature data (T1) matches a one or more of the threshold temperature criteria (TT).

5. System according to any of the previous claims wherein
- the user switch memory (25) is arranged for storing a plurality of temperature specific text messages (MT) associated with one or more threshold temperature criteria (TT); and
- the user switch controller (22) is arranged for matching the temperature data (T1) to the one or more threshold temperature criteria (TT); selecting a temperature specific text message from the plurality of temperature specific text messages (MT) based on the said matching; and composing the second electronic message (M2d) further comprising the selected temperature specific text message thereby providing an interpretation of the temperature data.

6. System according to any of the previous claims wherein
- the user switch memory (25) is arranged for storing a plurality of user specific text messages (MU) associated with one or more of the plurality of user addresses (A30d, A30e, A30f); and
- the user switch controller (22) is arranged for selecting one of the plurality of user specific text messages (MU) having an associated user address in common with the third address (A30d); and composing the second electronic message (M2d) further comprising the selected user specific text message thereby providing a specific interpretation of the second electronic message (M2d) for a user of the respective user module (30d).

7. System according to any of the previous claims wherein
- the module receiver 14 is arranged for receiving a plurality of temperature values at consecutive times; and
- the module controller (12) collects the plurality of temperature values to compose the temperature data (T1).

8. System according to any of the previous claims wherein the respective monitoring module (10a) is arranged for periodically transmitting the first electronic message (M1a) after a specific time period, wherein the temperature data (T1) comprises temperature values measured during the said specific time period.

9. System according to any of the previous claims, wherein the monitoring module (10a) is arranged for rechecking a hot water temperature (Th) after a time interval, if a hot water temperature (Th) matches a hot water temperature criterion (TTh), indicating that the hot water temperature (Th) is below a recommended temperature.

10. System according to any of the previous claims, wherein the first and/or second electronic message is only sent if a hot water temperature (Th) matches a hot water temperature criterion (TTh) during a period longer than a predetermined safety period, wherein a matching hot water temperature criterion (TTh) indicates that the hot water temperature (Th) is below a recommended temperature for killing the micro-organisms.

11. Temperature monitoring method (200) for preventing occurrence or proliferation of micro-organisms in a water supply (15), the method comprising
- providing a user switch (20) and a plurality of monitoring modules (10a,10b,10c),
- at a respective monitoring module (10a), measuring temperature data (T1) reflecting a temperature of water in a local part (15a) of the water supply (15); and
- composing a first electronic message (M1a) comprising
o the temperature data (T1),
o a first address (A10a) identifying the respective monitoring module (10a) as an origin address (O1) of the first electronic message (M1a), and
o a second address (A20) identifying the user switch (20) as a destination address (D1) of the first electronic message (M1a);
- transmitting the first electronic message (M1a) via a message transfer network (40) to its destination address (D1);
- at the user switch (20), receiving the first electronic message (M1a) via the message transfer network (40);
- storing a plurality of user addresses (A30d, A30e, A30f) identifying a respective plurality of user modules (30d, 30e, 30f);
- processing the first electronic message (M1a) and, based on the said processing, selecting a third address (A30d) from the plurality of user addresses (A30d, A30e, A30f), the third address (A30d) identifying a respective user module (30d) from the plurality of user modules (30d, 30e, 30f);
- composing a second electronic message (M2d) comprising
o the temperature data (T1) of the respective monitoring module (10a),
o the first address (A10a) identifying the respective monitoring module (10a), and
o the third address (A30d) identifying the respective user module (30d) as a destination address (D2) of the second electronic message (M2d); and
- transmitting the second electronic message (M2d) via the message transfer network (40) to its destination address (D2).

12. Non-transient computer-readable storage medium with program instructions that, when run on a temperature monitoring system according to claim 1, cause the system to perform the method of claim 11.

13. A monitoring module (10a) for use in a temperature monitoring system (100) according to any of the claims 1 - 10, wherein the monitoring module (10a) comprises
- a module receiver (14) arranged for receiving temperature data (T1) from a local data network (50), the temperature data (T1) transmitted to the local data network (50) by a respective measuring module (1a), the temperature data (T1) reflecting a temperature of water in a local part (15a) of the water supply (15);
- a module controller (12) arranged for composing a first electronic message (M1a) comprising
o the temperature data (T1),
o a first address (A10a) identifying the respective monitoring module (10a) as an origin address (O1) of the first electronic message (M1a), and
o a second address (A20) identifying the user switch (20) as a destination address (D1) of the first electronic message (M1a); and
- a module transmitter (13) arranged for transmitting the first electronic message (M1a) via a message transfer network (40); wherein the message transfer network (40) is arranged for routing the first electronic message (M1a) to its destination address (D1).

14. Monitoring module according to claim 13, wherein the monitoring module comprises a clock, wherein the monitoring module is arranged for transmitting the first electronic message at specific times indicated by the clock.

15. Monitoring module according to claim 13 or 14, wherein the monitoring module comprises a module memory arranged for storing a plurality of temperature specific text messages associated with one or more threshold temperature criteria; wherein the module controller is arranged for matching the temperature data to the one or more threshold temperature criteria; selecting a temperature specific text message from the plurality of temperature specific text messages based on the said matching; and composing the first electronic message further comprising the selected temperature specific text message thereby providing an interpretation of the temperature data.
